# EUROPÄISCHE PATENTSCHRIFT

(11) **EP 0 504 662 B1**
(45) Veröffentlichungstag und Bekanntmachung des Hinweises auf die Patenterteilung: **21.12.1994**
(21) Anmeldenummer: 92103715.6
(22) Anmeldetag: 05.03.1992
(51) Int. Cl.: B01J 31/02, C07B 39/00, B01J 27/12

(54) **Katalytisch wirksame Salzmischungen enthaltend ein quaternäres Alkylammoniumalkylcarbonat**
Catalytically active salt mixtures comprising a quaternary alkylammonium alkylcarbonate
Mélange de sels catalytiquement actif comprenant un alkylcarbonate d'alkylammonium quaternaire

(30) Priorität: 20.03.1991 DE 4109088
(43) Veröffentlichungstag der Anmeldung: 23.09.1992
(73) Patentinhaber: BASF Aktiengesellschaft, 67063 Ludwigshafen (DE)
(72) Erfinder: Wild, Jochen, Dr., W-6701 Ruppertsberg (DE); Goetz, Norbert, Dr., W-6520 Worms 1 (DE); Merger, Franz, Dr., W-6710 Frankenthal (DE); Frank, Juergen, Dr., W-6703 Limburgerhof (DE); Wolf, Hans-Josef, Dr., W-6701 Maxdorf (DE)

(56) Entgegenhaltungen:
- EP-A- 0 443 167
- US-A- 2 773 070
- US-A- 3 546 310
- US-A- 4 192 952
- US-A- 4 339 545
- US-A- 4 642 399

## Beschreibung

Die vorliegende Erfindung betrifft katalytisch wirksame Salzmischungen in aprotisch dipolaren Medien, enthaltend
a) ein quartäres Alkylammoniumalkylcarbonat der Formel I 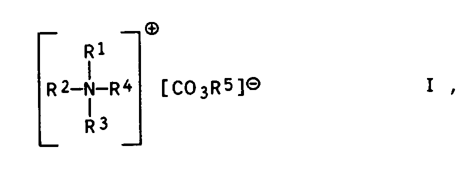 in der die Reste R¹ bis R⁵ für einen Alkyl- oder Cycloalkylrest mit 1 bis 10 C-Atomen stehen und wobei die Reste R¹ bis R⁵ gleich oder verschieden sein können,
b) 1,0 bis 1,5 molare Äquivalente, bezogen auf die Komponente a), eines Alkalimetallhydrogendifluorids der Formel II

   MF · HF II,

   wobei M für ein Alkalimetallkation steht, und
c) 0 bis 15 molare Äquivalente, bezogen auf die Komponente a) eines Alkalimetallfluorids MF, wobei M für ein Kation eines Alkalimetalls steht.

Weiterhin betrifft die Erfindung die Verwendung der Salzlösungen als Fluorierungsmittel sowie ihre Verwendung als Phasentransferkatalysatoren.

Lösungen von Salzen wie Halogeniden quartärer Stickstoffverbindungen werden in aprotisch dipolaren Medien wegen ihrer katalytischen Eigenschaften zur Fluorierung von Aromaten in Halogenaustauschreaktionen eingesetzt.

Ein typisches Beispiel für die Verwendung dieser Verbindungen als homogene Katalysatoren wird in der US-A 4 642 399 und US-A 4 418 229 beschrieben. Es werden Chlornitrobenzolderivate in der Gegenwart von Tetramethylammoniumhalogeniden, -nitraten oder -sulfaten mit einem Alkalimetallfluorid, beispielsweise Natriumfluorid, umgesetzt. Durch die Zugabe des Katalysators über einen längeren Zeitraum, wobei die Gesamtmenge genau so groß bleibt wie bei einmaliger Zugabe, läßt sich eine wesentliche Verbesserung der Ausbeute erreichen.

In der EP-A 0 289 942 werden beispielsweise Tetraalkylammoniumhalogenide als homogene Katalysatoren für Austauschreaktionen von Chlor gegen Fluor an Aromaten beschrieben, wobei eine besonders vorteilhafte Wirkung durch die Mitverwendung von Kronenethern erreicht wird.

Die US-A 4 845 304 beschreibt den Austausch von Chlor, Brom oder Jod gegen Fluor an Benzaldehyden unter Verwendung von quartären Phosphonium- oder Ammoniumsalzen.

In der US-A 4 140 719 werden ebenfalls quarternierte Stickstoff-, Arsen-, Phosphor-, Antimon- oder Wismutverbindungen mit beliebigen, zur Dissoziation in polaren Medien geeigneten Gegenionen aufgezählt, die als Phasentransfer-Katalysator zur Halogenaustauschreaktion mit Alkalifluoriden am Aromaten verwendet werden.

Auch die US-A 4 069 262 läßt quartäre Ammoniumverbindungen oder makrozyklische Ether als Katalysatoren zur Herstellung von 2-Fluornitrobenzol mit ultrafeinem Kaliumfluorid zu.

Ebenso wird in der DE-OS 36 42 333 die Verwendung von quartären Ammoniumhalogeniden als Katalysator für die mehrfach erwähnte Halogenaustauschreaktion am Aromaten offenbart.

Cäsiumfluorid ist gemäß der DE-OS 27 24 367 ebenfalls für die Fluorierung von Chlornitrobenzolen geeignet.

Salze wie Kalium- oder Cäsiumfluorid sind nicht katalytisch aktiv. Quartäre Ammoniumbromide oder -chloride sind gegenüber den entsprechenden -fluoriden verhältnismäßig preiswert, jedoch ist ein Nachteil, daß sie nicht die Gleichgewichtslage der Reaktion so günstig beeinflussen wie die Fluoride. Bei den Chloriden wird im Gegenteil das Gleichgewicht eher in Richtung Ausgangsverbindung, also dem Chloraromaten, verlagert.

Nachteil der quartären Ammoniumfluoride ist, daß sie unter Umständen nicht nur eine Substitution des Chloratoms, sondern auch einer anderen funktionellen Gruppe verursachen können. So wird in den Tetrahedron Letters 26, (1985), 2233-2236 eine Austauschreaktion unter Verwendung eines quartären Ammoniumfluorids beschrieben, wobei an Chlornitrobenzol auch eine Substitution der Nitrogruppe beobachtet wird.

Der vorliegenden Erfindung lag daher die Aufgabe zugrunde, einen Phasentransferkatalysator bereitzustellen, der die Gleichgewichtslage in gleicher Weise wie die quartären Ammoniumfluoride beeinflußt und kostengünstiger als diese herzustellen ist.

Demgemäß wurden die eingangs definierten katalytischen Salzmischungen sowie ihre Verwendung als Phasentransferkatalysatoren und als Fluorierungsmittel gefunden.

Die katalytisch wirksame Salzmischung enthält als Komponente a) ein quartäres Alkylammoniumalkylcarbonat der Formel I

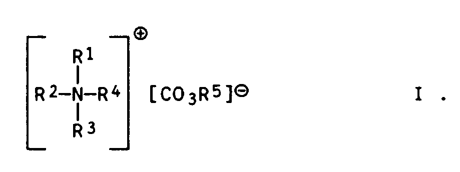

Die Reste R¹ bis R⁵ repräsentieren einen Alkyl- oder Cycloalkylrest mit 1 bis 10 C-Atomen, wie Methyl, Ethyl, Propyl, Isopropyl, Butyl, Isobutyl, tert.Butyl, Pentyl, Neopentyl, Cyclopentyl, Hexyl, Cyclohexyl oder Nonyl. Bevorzugte Reste sind der Methyl- und der Ethylrest, wobei der Methylrest ganz besonders bevorzugt ist. Die Reste R¹ bis R⁵ können gleich oder verschieden sein; es ist aber vorteilhaft, wenn R²-R⁵ für einen Methylrest steht und R¹ einen primären, sekundären, linearen oder cyclischen Alkylrest mit 1 - 10 C-Atomen bedeutet. Am meisten bevorzugt ist für R¹ aber auch der Methylrest.

Die Herstellung der quartären Ammoniumcarbonate I erfolgt nach der EP-A 291 074, wobei das entsprechende tertäre Amin mit einem Dialkylcarbonat zum gewünschten Salz umgesetzt wird.

Ein wesentlicher Vorteil gegenüber den hygroskopischen und deshalb nur nach aufwendiger Trocknung schwierig zu dosierenden bekannten quartären Ammoniumhalogeniden, die als Phasentransferkatalysatoren verwendet werden, ist, daß die Darstellung der Komponenten a) der erfindungsgemäßen katalytisch wirksamen Salzlösungen, die als quartäres Ammoniumsalz formal einen ähnlichen Aufbau wie die bisher bekannten Phasentransferkatalysatoren besitzen, aus den erwähnten Trialkylaminen und den entsprechenden Dialkylcarbonsäureestern in Anwesenheit der Alkalimetallhydrogendifluoride und ggf. der Alkalimetallfluoride, also in dem üblichen Reaktionsmittel möglich ist, in dem die anschließend zu katalysierende Reaktion durchgeführt wird. Die quartären Alkylammoniumalkylcarbonate lassen sich aber auch isolieren und in Substanz der Reaktionslösung zusetzen.

Als Komponente b) eignen sich grundsätzlich alle Alkalimetallhydrogendifluoride der allgemeinen Formel II

MF · HF II .

Bevorzugt sind Kalium- oder Natriumhydrogendifluorid, wobei Kaliumhydrogendifluorid besonders vorteilhaft ist.

Man setzt die Komponente b) der erfindungsgemäßen katalytisch wirksamen Salzmischung in einer Menge von 1 bis 1,5, vorzugsweise von 1 bis 1,3 molaren Äquivalenten, insbesondere aber in äquimolarer Menge, bezogen auf die Komponente a), ein.

Als Komponente c) der erfindungsgemäßen katalytisch wirksamen Salzmischungen verwendet man vorzugsweise Kaliumfluorid, das durch übliche Trocknungsverfahren von protischen Lösungsmittelresten befreit ist.

Die verwendete Menge liegt im allgemeinen zwischen 0 und 15, vorzugsweise im Bereich von 0-1 molaren Äquivalenten, bezogen auf die Komponente a). Speziell zum Zwecke der Fluorierung von Chloraromaten verwendet man die Komponente c) in einer Menge von 0,2 bis 10 molaren Äquivalenten, insbesondere aber in einer Menge von 4 bis 8 molaren Äquivalenten, bezogen auf die Gesamtmenge an Komponente a).

Die Herstellung der erfindungsgemäßen katalytisch wirksamen Salzmischungen erfolgt durch Mischen der einzelnen Komponenten a) - b) und gegebenenfalls c) in einem aprotisch dipolaren Lösungsmittel.

Die erfindungsgemäßen katalytisch wirksamen Salzmischungen werden vorzugsweise zur Fluorierung von Chloraromaten eingesetzt, wobei ein Austausch des Chloratoms gegen ein Fluoratom erfolgt. Ganz allgemein läßt sich die Reaktion durch folgende Gleichung beschreiben: 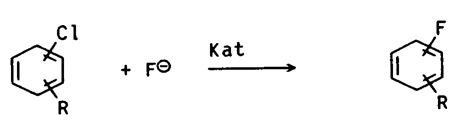
Das für den Austausch benötigte Fluoridion wird von der katalytisch wirksamen Salzmischung geliefert.

Besonders vorteilhaft lassen sich Aromaten der allgemeinen Formel III 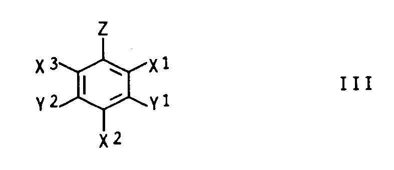
umsetzen, in der Z eine elektronenziehende funktionelle Gruppe wie -NO₂, -CF₃, -CN, -CHO, -COF, -CO-Alkyl- oder -CO-Halogenalkyl bedeutet.
- Y^{1,2}: stehen für Wasserstoff-, Halogenatome oder eine der genannten funktionellen Gruppen Z und
- X^{1,2,3}: stehen für Wasserstoff-, Fluor- oder Chloratome, wobei mindestens ein X für ein Chloratom steht.

Zur Halogenaustauschreaktion verwendet man die erfindungsgemäßen katalytisch wirksamen Salzmischungen vorteilhaft in einer Menge, daß die Komponente a) in einer Menge von 3 bis 300 mol-%, bezogen auf 100 mol-% an umzusetzenden Aromaten, vorliegt. Besonders bevorzugt aber ist ein Mengenbereich der Komponenten a) von 5 bis 150 mol-%. Die übrigen Anteile an Komponente b) und c) ergeben sich entsprechend aus den oben angegebenen Mengenverhältnissen in der Zusammensetzung der katalytisch wirksamen Salzlösungen.

Die erfindungsgemäßen katalytisch wirksamen Salzmischungen können aber noch andere übliche Katalysatoren, wie man sie z.B. bei Halogenaustauschreaktionen verwendet, enthalten.

Als Lösungsmittel für die Salze der erfindungsgemäßen Salzlösungen kommen grundsätzlich alle aprotisch dipolaren Lösungsmittel in Frage, besonders aber Sulfolan, N-Methylpyrrolidon, Dimethylsulfoxid, Benzonitril, Nitrobenzol, Dimethylacetamid, Ethylenglykoldimethylether und Diethylenglykoldimethylether.

Besonders vorteilhaft ist die Möglichkeit solcher Reaktionen, die durch die erfindungsgemäßen Salzlösungen katalysiert werden, wie beispielsweise Halogenaustauschreaktionen am Aromaten, so durchzuführen, daß man die erfindungsgemäßen katalytisch wirksamen Salzlösungen nach ihrer Bereitung mittels eines Schleppers wie Benzol oder Toluol völlig von protischen Lösungsmittelrückständen befreit und das umzusetzende Substrat in Substanz oder ebenfalls im getrockneten aprotischen dipolaren Lösungmittel zusetzt.

Durch die Verwendung der erfindungsgemäßen katalytisch wirksamen Salzlösungen wird bei Chloraustauschreaktionen am Aromaten die Bildung des Fluorderivats so beschleunigt, daß bei hohen Raum-Zeit-Ausbeuten Temperaturen unterhalb 220°C, möglich sind. Somit können auch temperaturempfindliche Substrate umgesetzt werden.

### Beispiele

### Beispiel 1: Herstellung von 2,4,6-Trifluorpyrimidin

15 g (0,1 mol) Tetramethylammoniummethylcarbonat, 9,37 g (0,12 mol) Kaliumhydrogenfluorid und 58,1 g (1 mol) technisches Kaliumfluorid in 250 ml Sulfolan wurden bei 90°C gerührt, bis die CO₂-Entwicklung beendet war. Bei der Reaktion gebildetes Wasser und Methanol, welches hauptsächlich aus dem technischen Kaliumfluorid und dem Lösungsmittel stammt, wurden durch azeotrope Destillation mit Toluol entfernt. Hierzu wurden 100 ml Toluol der Mischung zugesetzt und bei Normaldruck abdestilliert. Gegen Ende der azeotropen Destillation wurde ein Vakuum von 20 mbar angelegt, die Temperatur auf 190°C gesteigert und noch 50 ml Sulfolan aus der Mischung herausdestilliert. Anschließend wurde die Temperatur bei Normaldruck auf 210°C erhöht, 45,9 g (0,25 mol) 2,4,6-Trichlorpyrimidin innerhalb von 2 h zugegeben und bei 120-130°C das Produkt zusammen mit etwas Sulfolan unmittelbar abdestilliert.

Die Aufreinigung der Produktfraktion ergab:
32,2 g 2, 4, 6-Trifluorpyrimidin vom Kp. 97-102°C (96 % d. Th.)
9 g Sulfolan

### Beispiel 2: Herstellung von 2,6-Difluorbenzonitril

69,6 g (1,2 mol) technisches Kaliumfluorid, 17,2 g (0,24 mol) Kaliumhydrogenfluorid und 51,8 g (0,24 mol) Cyclohexyl-trimethylammoniummethylcarbonat in 350 ml Sulfolan wurden bei 90°C gerührt, bis die CO₂-Entwicklung beendet war. Bei der Reaktion gebildetes Methanol und Wasser wurden wie in Beispiel 1 entfernt. Anschließend wurden 94,6 g (0,55 mol) 2,6-Dichlorbenzonitril zugegeben und 2,5 h bei 190°C gerührt. Nach dieser Zeit wurde die gesamte Reaktionsmischung einer Destillation unterworfen. Man erhielt bei 100 mbar/190° die Produktfraktion, welche noch 10 bis 20 % Sulfolan enthielt, bei 20 mbar/190° Sulfolan, welches ohne weitere Reinigung erneut eingesetzt werden konnte.

Die Aufreinigung der Produktfraktion ergab:
59 g (77,2 %) 2,6-Difluorbenzonitril
9,6 g (11,2 %) 2-Chlor-6-fluorbenzonitril
13 g Sulfolan
Von dem eingesetzten Sulfolan wurden insgesamt 92 % zurückgewonnen.

## Patentansprüche

1. Katalytisch wirksame Salzmischungen in aprotisch dipolaren Medien, enthaltend
a) ein quartäres Alkylammoniumalkylcarbonat der allgemeinen Formel I 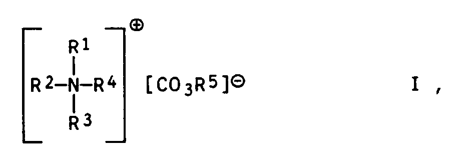 in der die Reste R¹ bis R⁵ für einen Alkyl- oder Cycloalkylrest mit 1 bis 10 C-Atomen stehen und wobei die Reste R¹ bis R⁵ gleich oder verschieden sein können,
b) 1,0 bis 1,5 molare Äquivalente, bezogen auf die Komponente a eines Alkalimetallhydrogendifluorids der Formel II
MF · HF II,
wobei M für ein Alkalimetallkation steht, und
c) 0 bis 15 molare Äquivalente, bezogen auf die Komponente a), eines Alkalimetallfluorids MF, wobei M für ein Kation eines Alkalimetalls steht.

2. Katalytisch wirksame Salzmischungen nach Anspruch 1, die als Komponente a) ein quartäres Alkylammoniumalkylcarbonat der Formel I enthalten, dessen Reste R² bis R⁵ identisch sind und dessen Rest R¹ verschieden von R² bis R⁵ ist.

3. Katalytisch wirksame Salzmischungen nach den Ansprüchen 1 und 2, die als Komponente a) ein quartäres Alkylammoniumalkylcarbonat der Formel I enthalten, dessen Reste R² bis R⁵ eine Methylgruppe repräsentieren und R¹ eine der obengenannten Alkyl- oder Cycloalkylgruppen darstellt.

4. Katalytisch wirksame Salzmischungen nach Anspruch 1, die als Komponente a) ein quartäres Alkylammoniumalkylcarbonat der Formel I enthalten, dessen Reste R¹ bis R⁵ für Methylgruppen stehen.

5. Katalytisch wirksame Salzmischungen nach den Ansprüchen 1 bis 5, worin die Komponenten a) und b) im äquimolaren Verhältnis enthalten sind.

6. Katalytisch wirksame Salzmischungen nach den Ansprüchen 1 bis 6, deren Komponente b) Kaliumhydrogendifluorid ist.

7. Verwendung der katalytisch wirksamen Salzmischungen gemäß den Ansprüchen 1 bis 7 als Phasentransferkatalysator.

8. Verwendung der katalytisch wirksamen Salzmischungen gemäß den Ansprüchen 1 bis 7 als Phasentransferkatalysator bei Fluorierungsreaktionen.

9. Verwendung der katalytisch wirksamen Salzmischungen als Phasentransferkatalysator bei Fluorierungsreaktionen an Chloraromaten.

## Claims

1. A catalytically active salt mixture in an aprotic dipolar medium, containing
a) a quaternary alkylammonium alkylcarbonate of the general formula I 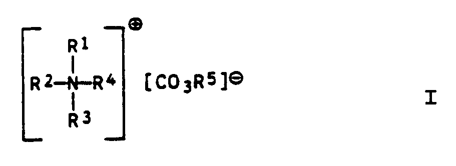 where R¹ to R⁵ are each an alkyl or cycloalkyl radical of 1 to 10 carbon atoms and R¹ to R⁵ may be identical or different,
b) from 1.0 to 1.5 molar equivalents, based on component a, of an alkali metal hydrogen difluoride of the formula II
MF · HF II
where M is an alkali metal cation, and
c) from 0 to 15 molar equivalents, based on component a), of an alkali metal fluoride MF, where M is a cation of an alkali metal.

2. A catalytically active salt mixture as claimed in claim 1, which contains, as component a), a quaternary alkylammonium alkylcarbonate of the formula I, where R² to R⁵ are identical and R¹ differs from R² to R⁵.

3. A catalytically active salt mixture as claimed in claims 1 and 2, which contains, as component a), a quaternary alkylammonium alkylcarbonate of the formula I, where R² to R⁵ are each methyl and R¹ is one of the above-mentioned alkyl or cycloalkyl groups.

4. A catalytically active salt mixture as claimed in claim 1, which contains, as component a), a quaternary alkylammonium alkylcarbonate of the formula I, where R¹ to R⁵ are each methyl.

5. A catalytically active salt mixture as claimed in any of claims 1 to 5, wherein components a) and b) are present in an equimolar ratio.

6. A catalytically active salt mixture as claimed in any of claims 1 to 6, whose component b) is potassium hydrogen fluoride.

7. Use of a catalytically active salt mixture as claimed in any of claims 1 to 7 as a phase transfer catalyst.

8. Use of a catalytically active salt mixture as claimed in any of claims 1 to 7 as a phase transfer catalyst in fluoridation reactions.

9. Use of a catalytically active salt mixture as a phase transfer catalyst in fluoridation reactions with chloroaromatics.

## Revendications

1. Mélange de sels catalytiquement actifs dans des milieux dipolaires et aprotiques, contenant :
a) un alkylcarbonate d'alkylammonium quaternaire de la formule générale I : 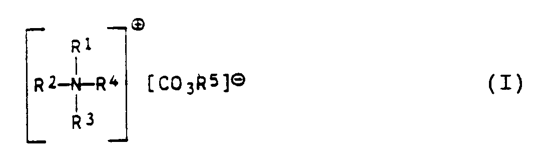 dans laquelle les symboles R¹ à R⁵ représentent chacun un radical alkyle ou cycloalkyle qui comporte de 1 à 10 atomes de carbone et où les symboles R¹ à R⁵ peuvent avoir des significations identiques ou différentes,
b) 1,0 à 1,5 équivalent molaire, par rapport au composant a), d'un hydrogénodifluorure de métal alcalin de la formule II :
MF · HF (II)
dans laquelle M représente un cation de métal alcalin, et
c) 0 à 15 équivalents molaires, par rapport au composant a), d'un fluorure de métal alcalin MF, où M représente le cation d'un métal alcalin.

2. Mélange de sels catalytiquement actifs suivant la revendication 1, qui contiennent, à titre de composant a), un alkylcarbonate d'alkylammonium quaternaire de la formule I, dont les symboles R² à R⁵ ont des significations identiques et dont le symbole R¹ a des significations différentes de celles de R² à R⁵.

3. Mélange de sels catalytiquement actifs suivant les revendications 1 et 2, qui contiennent, à titre de composant a), un alkylcarbonate d'alkylammonium quaternaire de la formule I, dont les symboles R² à R⁵ représentent chacun le radical méthyle et R¹ représente l'un des radicaux alkyle ou cycloalkyle susmentionnés.

4. Mélange de sels catalytiquement actifs suivant la revendication 1, qui contiennent, à titre de composant a), un alkylcarbonate d'alkylammonium quaternaire de la formule I, dont les symboles R¹ à R⁵ représentent des radicaux méthyle.

5. Mélange de sels catalytiquement actifs suivant l'une quelconque des revendications 1 à 5, où les composants a) et b) sont contenus en proportion équimolaire.

6. Mélange de sels catalytiquement actifs suivant l'une quelconque des revendications 1 à 5, dont le composant b) est l'hydrogénodifluorure de potassium.

7. Utilisation des mélanges de sels catalytiquement actifs suivant l'une quelconque des revendications 1 à 7, à titre de catalyseurs de transfert de phases.

8. Utilisation des mélanges de sels catalytiquement actifs suivant l'une quelconque des revendications 1 à 7, à titre de catalyseurs de transfert de phases au cours de réactions de fluoration.

9. Emploi des mélanges de sels catalytiquement actifs à titre de catalyseurs de transfert de phases au cours de réactions de fluoration sur des composés chloraromatiques.
